Europäisches Patentamt

(19) European Patent Office

Office européen des brevets

(11) Numéro de publication: **0 007 860**
**B1**

## (12) FASCICULE DE BREVET EUROPEEN

(45) Date de publication du fascicule du brevet: **12.05.82**

(51) Int. Cl.³: **F 24 D 11/02, F 24 J 3/04**

(21) Numéro de dépôt: **79400508.2**

(22) Date de dépôt: **18.07.79**

(54) **Installation de chauffage d'un local par pompe à chaleur.**

(30) Priorité: **20.07.78 FR 7821575**

(43) Date de publication de la demande:
**06.02.80 Bulletin 80/3**

(45) Mention de la délivrance du brevet:
**12.05.82 Bulletin 82/19**

(84) Etats contractants désignés:
**AT BE CH DE GB IT LU NL SE**

(56) Documents cités:
**DE - A - 2 558 137**
**DE - A - 2 624 147**
**US - A - 2 028 584**
**US - A - 2 468 626**
**US - A - 2 966 781**
**US - A - 3 993 121**

(73) Titulaire: **Bernier, Jacques Maurice**
**Le Marais Labbé La Tour**
**F-17230 Marans (FR)**

(72) Inventeur: **Bernier, Jacques Maurice**
**Le Marais Labbé La Tour**
**F-17230 Marans (FR)**

(74) Mandataire: **Netter, André**
**40, rue Vignon**
**F-75009 Paris (FR)**

Courier Press, Leamington Spa, England.

## Installation de chauffage d'un local par pompe à chaleur

L'invention a pour objet une installation de chauffage d'une pièce d'habitation par pompe à chaleur et en particulier, une installation propre à être posée dans un local existant, notamment une pièce d'un immeuble ancien.

On a déjà proposé des installations à pompe à chaleur pour le chauffage d'un local ou de locaux d'immeuble, l'installation étant en général posée au cours de la construction de l'immeuble.

On connaît notamment, par le Brevet US—A—3 993 121 unt telle installation de chauffage à pompe à chaleur pour un immeuble, cette installation étant associée à un dispositif de chauffage électrique, afin de chauffer de l'air mis en circulation forcée dans une enceinte alimentant une conduite de distribution de l'air chaud. L'installation comprend un condenseur placé à l'intérieur de l'immeuble, tandis que l'évaporateur est placé à l'extérieur. Une telle installation ne peut cependant être utilisée pour le chauffage d'une seule pièce d'un immeuble déjà existant et a une consommation d'énergie très importante, notamment en raison de l'utilisation du dispositif de chauffage électrique associé.

On connaît également, par le Brevet US—A—2 028 584 une machine frigorifique dans laquelle un condenseur entoure un compresseur. Toutefois, le condenseur décrit dans ce Brevet antérieur est destiné à évacuer une puissance thermique relativement très faible et ne pourrait être utilisé dans une installation de pompe à chaleur, dans laquelle la puissance thermique à évacuer est nécessairement beaucoup plus importante.

L'invention a pour objet une installation à pompe à chaleur pour le chauffage d'un local, ne présentant pas les inconvénients mentionnés plus haut.

Elle propose à cet effet une installation de chauffage d'un local par de l'air chaud à l'aide d'une pompe à chaleur comprenant un condenseur placé à l'intérieur du local et un évaporateur placé à l'extérieur, caractérisée en ce que le condenseur est disposé dans une enveloppe ouverte à ses extrémités inférieure et supérieure, dans laquelle l'air circule de bas en haut par tirage naturel provoqué par le chauffage de l'air lors de son passage le long du condenseur.

Selon une variante, l'invention propose une installation de chauffage d'un local par de l'air chaud à l'aide d'une pompe à chaleur comprenant un condenseur placé à l'intérieur du local et un évaporateur placé à l'extérieur, caractérisée en ce que le condenseur forme une enveloppe ouverte à ses extrémités supérieure et inférieure, dans laquelle l'air circule de bas en haut par tirage naturel provoqué par le chauffage de l'air lors de son passage le long du condenseur.

Une telle installation de chauffage a une consommation d'énergie très faible, car l'air de chauffage du local est chauffé uniquement par passage le long d'un condenseur, et ce passage s'effectue par tirage naturel dans une enveloppe ouverte à ses extrémités supérieure et inférieure, dans laquelle est disposé le condenseur de l'installation ou bien qui est formée elle-même par ce condenseur.

Une telle installation peut être établie dans une pièce avec un minimum de travaux et sans entraîner de détérioration. Elle est en outre d'un encombrement réduit et trouve naturellement son emplacement à l'endroit requis dans la pièce.

Dans la description qui suit, faite à titre d'exemple, on se réfère aux dessins annexés, dans lesquels:

— la figure 1 est une vue schématique, partie en perspective, partie en coupe, d'une pièce équipée d'une installation selon l'invention;

— la figure 2 est une vue schématique d'une installation selon l'invention avec coupe partielle pour une forme de réalisation, le mur limitant la pièce n'étant pas figuré pour plus de clarté;

— la figure 3 est une vue perspective relative à cette forme de réalisation, le mur limitant la pièce n'étant pas figuré pour plus de clarté;

— la figure 4 est une vue de face d'une plaque de circulation de fluide, avant sa conformation;

— la figure 5 est une vue en coupe transversale horizontale schématique d'une variante de réalisation du condenseur selon la figure 2;

— la figure 6 est une vue analogue à la figure 2, mais pour une autre forme de réalisation;

— la figure 7 est une vue schématique montrant, en coupe horizontale, un évaporateur pour une forme de réalisation;

— la figure 8 est une vue en coupe transversale horizontale schématique d'une variante de réalisation de l'évaporateur selon la figure 3:

— la figure 9 est un schéma d'une installation propre à fonctionner pour le chauffage et le refroidissement;

— la figure 10 est une vue schématique d'une variante de réalisation d'une installation selon l'invention, avec coupe partielle horizontale.

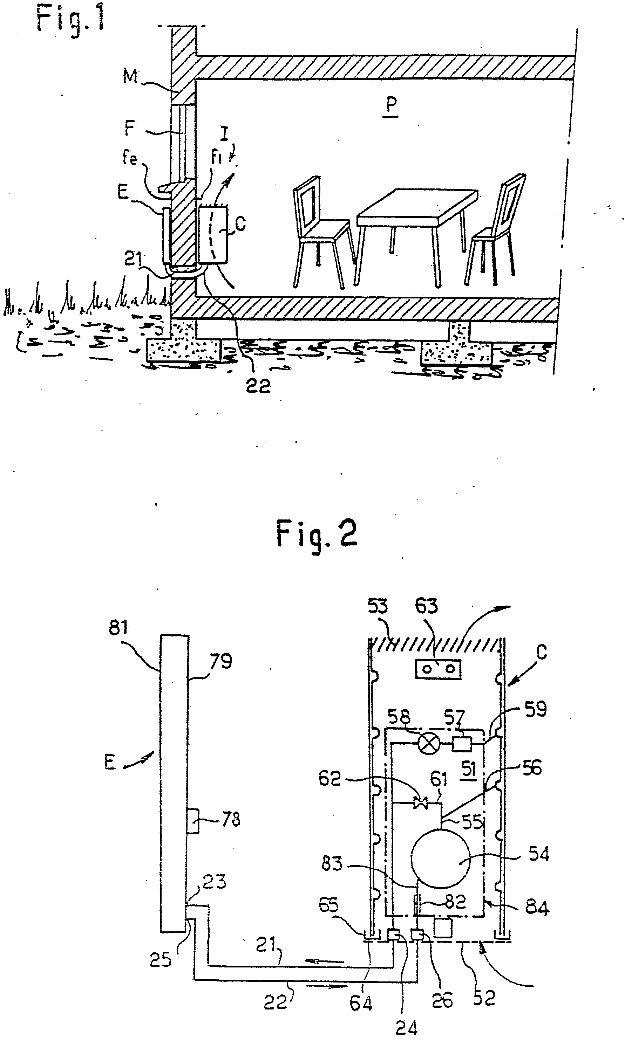

Pour chauffer la pièce P (figure 1) d'un local d'immeuble, on pose une installation I selon l'invention qui comprend la partie C de condenseur d'une pompe à chaleur, placée dans la pièce P, le long d'un mur M, avantageusement sous une fenêtre F. La partie évaporateur E de ladite pompe à chaleur est placée à l'extérieur, le long du mur M, contre la face extérieure *fe* de celui-ci, tandis que la partie condenseur C est placée contre la face intérieure *fi* du mur, la partie condenseur C et la partie évaporateur E étant reliées par des tubulures 21 et 22 (figure 2), avantageusement ment du type à extrémités auto-obturables, respectivement 23, 24 et 25, 26.

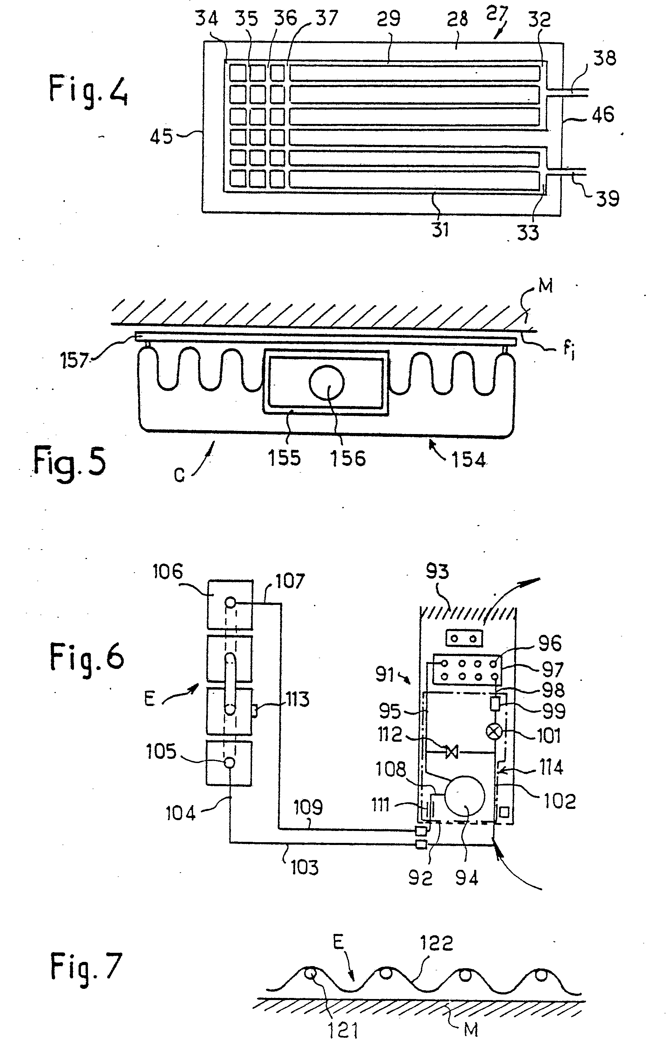

La partie condenseur C de la pompe à chaleur est constituée par une plaque 27 (figure 4) du type "rollbond" ou "printed conduit sheeting" formée par l'assemblage de deux feuilles 28 réservant entre elles un circuit de fluide frigorigène comprenant des branches parallèles 29, 31 reliant des voies transversales d'entrée et de sortie 32, 33, avec, à l'autre extrémité, plusieurs voies transversales comme montré en 34, 35, 36, 37, l'entrée et la sortie de fluide se faisant par les embouts 38, 39.

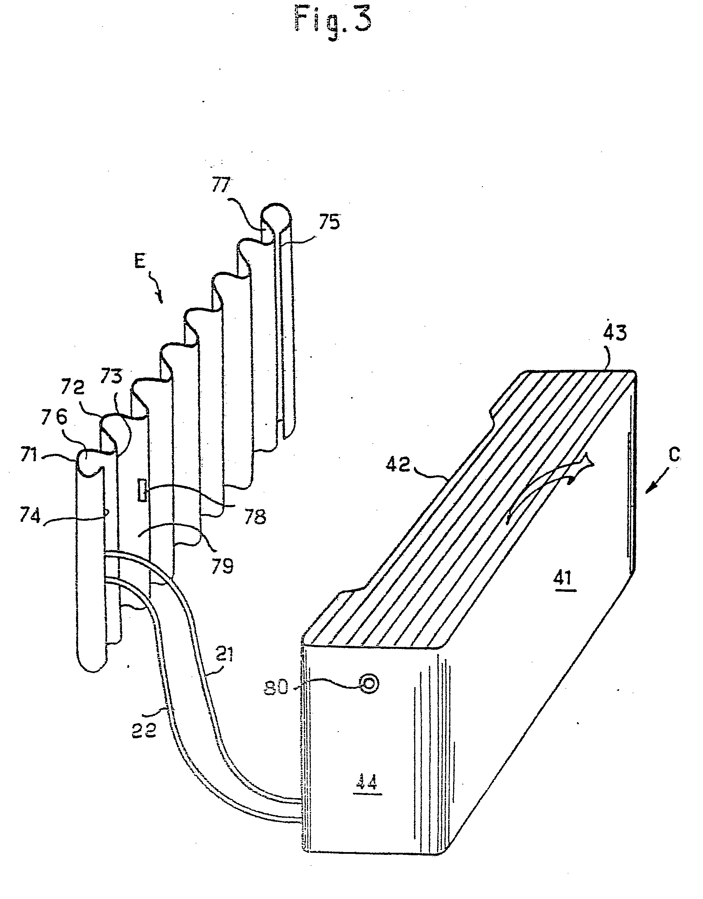

Une telle plaque 27, initialement plane, est conformée suivant un parallélépipède rectangle avec des faces longitudinales 41 et 42 (figure 3) raccordées par des faces transversales 43 et 44, les bords 45 et 46 de la plaque 27 étant mis bout à bout et solidarisés entre eux par rivetage.

La plaque 27 ainsi conformée a une configuration de cheminée ou de gaine limitant une chambre intérieure 51 (figure 2) ouverte à son extrémité inférieure et son extrémité supérieure, garnies respectivement d'un grillage 52 et d'un jeu de volets obliques 53 dirigés de l'extérieur vers l'intérieur du local dans le sens allant de bas en haut.

Dans la chambre 51 est logé le compresseur 54 de la pompe à chaleur dont font partie le condenseur C et l'évaporateur E, la sortie à haute pression 55 du compresseur étant reliée par une canalisation 56 à l'embout 38 du condenseur, et un déshydrateur 57 ainsi qu'un organe de détente 58 étant prévus sur la canalisation de retour 59 reliée à l'embout 39 et à l'extrémité 24. L'organe de détente est soit un orifice calibré (capillaire ou similaire), soit un détendeur thermostatique.

De la canalisation 56 est issue une dérivation 61 contrôlée par une vanne 62, ou vanne de dégivrage, reliée à la canalisation 59 en aval de l'organe de détente 58.

A la partie supérieure de la chambre ou volume 51 est disposé éventuellement un appareil de chauffage distinct 63 qui peut être à eau chaude, ou électrique, destiné à être mis en fonctionnement en cas de grand froid.

Pour minimiser les bruits dus au compresseur 54, celui-ci peut être placé dans une caisse isolante acoustique 84, dont les parois sont constitués par exemple de laine de roche à forte densité, limitées vers l'intérieur de la caisse par une tôle perforée et vers l'extérieur par une enveloppe métallique. Le déshydrateur 57, l'organe de détente 58, la vanne 62, et un dispositif de réchauffage 82 peuvent être également placés à l'intérieur de la caisse 84.

L'évaporateur E est constitué par une plaque 71 (figure 3) par exemple en aluminium, du même type que celle constitutive du condenseur C, mais dont l'entrée 23 et la sortie 25 sont inversées par rapport à l'entrée 38 et la sortie 30 du condenseur et qui est disposée suivant une configuration à ondulations cylindriques, les génératrices des cylindres étant verticales et la configuration formant des lignes d'apex extérieures 72 et des lignes d'apex intérieures 73, les bords extrêmes 74 et 75 de la plaque étant rapprochés de la partie adjacente, respectivement 76 et 77.

La nappe ou rideau que forme l'évaporateur E est placé en regard de la face extérieure *fe* du mur M, avec les apex 73 en contact, ou en quasi-contact, avec ladite face extérieure.

Avantageusement, un thermostat de dégivrage 78 est fixé sur la face interne 79 de la plaque 71. Un thermostat d'ambiance 80, par exemple à bulbe à deux étages, fixé sur le condenseur, assure la régulation de température du local: le premier étage agit sur la mise en route du compresseur; le second étage agit sur la mise en service de l'appareil de chauffage d'appoint.

Le fonctionnement est le suivant:

la pompe à chaleur fonctionne à la manière habituelle, suivant le cycle de Carnot, le fluide frigorigène, habituellement du dichlorodifluorométhane ($r_{12}$) passant de l'état liquide à l'état gazeux et vice versa, la chaleur latente dégagée par condensation étant utilisée pour le chauffage de la pièce P et la chaleur de l'air extérieur étant mise à profit pour l'évaporation du fluide contenu dans la tubulure interne de la plaque constitutive de l'évaporateur E.

La pièce P est chauffée par le rayonnement de la plaque constitutive du condenseur, le fluide circulant à l'intérieur de cette plaque étant, par exemple, à une température de l'ordre de 40°C, et simultanément, l'air froid du local pénètre dans la chambre 51 par l'extrémité inférieure de la gaine suivant laquelle est conformée ladite plaque, et chauffé par le contact avec ladite plaque, circule de bas en haut dans ladite gaine, s'échappant par les volets 53 et contribuant au chauffage de la pièce.

Le fluide froid circulant dans la tubulure de l'évaporateur E, par exemple à —10°C, emprunte de la chaleur à l'air extérieur, qui est par exemple à —5°C, et ledit air circule le long de la plaque 71, de haut en bas, en léchant la face extérieure 81 de cette dernière, et aussi sa face intérieure, la configuration suivant des ondulations étant favorable à cette circulation et ainsi à l'échange de chaleur entre l'air extérieur et le fluide contenu dans ladite plaque. Le cas échéant, le rayonnement solaire ajoute son effet à la circulation de l'air le long de l'élément E.

Pour dégivrer, par exemple sous la commande du thermostat de dégivrage 78 ce qui peut devenir nécessaire lorsque la température externe est, pendant une pluralité de jours consécutifs, inférieure à une limite déterminée, par exemple 5°C, la vanne de dégivrage 62 est ouverte et, simultanément, un dispositif de réchauffage 82 entourant la canalisation 83 reliant le côté aspiration du compresseur 54 et la tubulure 22 est mis en action. La vanne 62 dirige ainsi les gaz chauds sortant du compresseur vers l'évaporateur, faisant fondre le givre. Le fluide sortant de l'évaporateur, est réchauffé par le réchauffeur 82, ce qui accélère le dégivrage et permet en outre d'éviter les aspirations de liquide par le compresseur. Au cours du dégivrage, l'air extérieur circule le long de la plaque 71 de bas en haut, sa circulation étant accélérée par les déperditions de l'immeuble à chauffer.

Les raccords auto-obturables permettent, sur place, un montage de la pompe à chaleur rapide et sans fuite de fluide frigorigène, sans charge en fluide ni tirage au vide, les raccords étant à la fois étanches et préchargés. On a constaté qu'un orifice de 5 cm de diamètre dans le mur M étant suffisant pour le passage des tuyauteries.

Dans la forme de réalisation du condenseur C montré à la figure 5, on replie en accordéon les extrémités latérales d'une plaque 154 similaire à la plaque 27 et on les rabat le long de la partie centrale de la plaque 154 en ménageant un intervalle entre ces extrémités, dans lequel est placée une caisse d'isolation 155 recevant comme précédemment le compresseur 156. Les canalisations reliant le compresseur aux tubulures de la plaque 154 et à l'évaporateur E sont semblables à celles qui ont été décrites en rapport avec la réalisation selon la figure 2, et les parties en accordéon de la plaque 154 sont tournées vers la face $f_i$ du mur M avec interposition d'un moyen de support 157.

On se réfère maintenant à la figure 6. Dans cette forme de réalisation, l'appareil de chauffage intérieur à la pièce comprend une hotte ou gaine 91 en tôle dont l'extrémité inférieure, ouverte, est garnie par une grille 92 et l'extrémité supérieure, également ouverte, est garnie par un jeu de volets 93. C'est à l'intérieur de la gaine 91 que se trouve, à la partie inférieure, le compresseur 94 de la pompe à chaleur dont le conduit de refoulement 95 est relié à un faisceau de tubes parallèles 96 d'un échangeur de chaleur comprenant lesdits tubes ainsi que des ailettes 97, traversées avec contact par lesdits tubes.

La sortie de l'échangeur se fait par une canalisation 98 sur laquelle se trouve un déshydrateur 99 et l'organe de détente 101 de la pompe à chaleur, la canalisation de sortie 102 étant reliée par l'intermédiaire d'une tubulure auto-obturable 103 à l'entrée 104 d'un autre échangeur de chaleur, à tubes et ailettes, placé à l'extérieur et jouant le rôle d'évaporateur E.

Les tubes 105 dudit évaporateur sont horizontaux, parallèles à la face extérieure *fe* du mur M et sont garnis d'ailettes 106.

La sortie du fluide frigorigène de l'évaporateur se fait par une canalisation 107 qui se raccorde à l'entrée 108 du compresseur 94 par l'intermédiaire d'une tubulure 109 à extrémités auto-obturables. Sur la canalisation d'entrée 108 est prévu un dispositif de réchauffage 111, mis en action en même temps qu'est commandé le dégivrage par l'ouverture d'une vanne de dégivrage 112 qui réalise un bipasse de l'échangeur de chaleur du compresseur, par exemple sous la commande d'un thermostat de dégivrage 113.

Comme précédemment, le compresseur 94, la vanne 112, l'organe de détente 101 et le déshydrateur 99 sont placés à l'intérieur d'une caisse d'insonorisation 114.

En variante, le compresseur 94 peut être placé à une extrémité latérale de la hotte 91, le reste du volume délimité par la hotte étant occupé par les tubes parallèles placés en nappe de l'échangeur de chaleur.

Dans la forme de réalisation montrée sur la figure 7, l'évaporateur E comprend des tubes 121 dans lesquels circule le fluide frigorigène, parallèles entre eux et fixés sur une plaque ondulée 122, métallique, disposée contre le mur.

Dans une autre variante, l'évaporateur peut être du type des radiateurs utilisés dans le chauffage central.

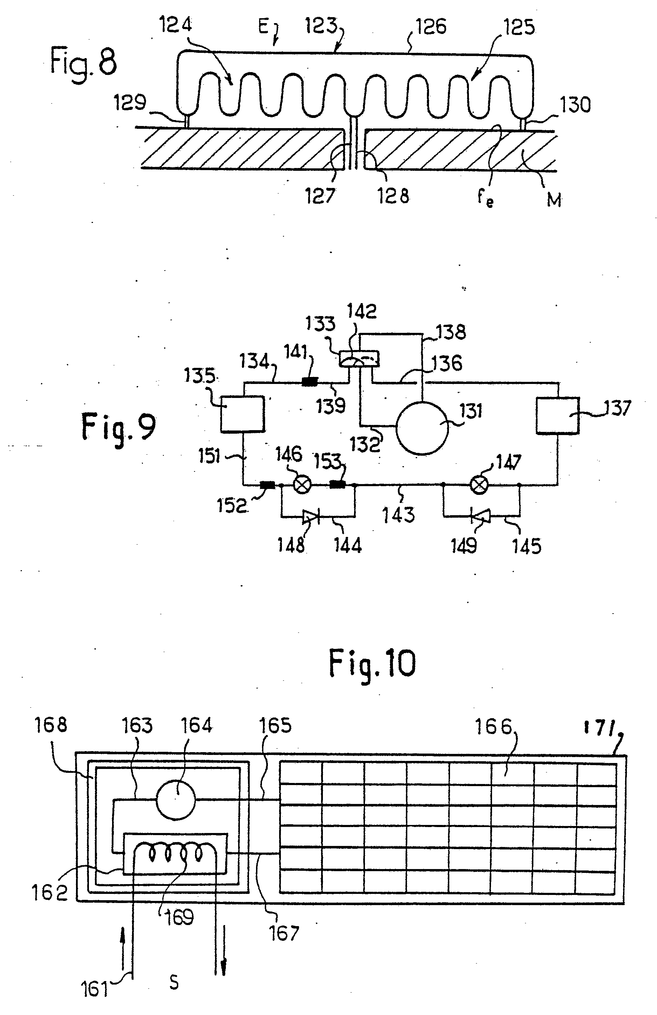

Dans encore une autre variante (figure 8), l'évaporateur E est constitué par une plaque 123 similaire à la plaque 27, dont les parties latérales sont repliées en accordéon et rabattues le long de la partie centrale 126 de la plaque. Les parties repliées 124, 125 sont placées le long du mur M, les canalisations de raccords 127, 128 se trouvant alors à distance des extrémités latérales de l'évaporateur, qui peut être monté sur le mur à l'aide de potences ou d'éléments de fixation 129, 130. On obtient ainsi un évaporateur de dimensions réduites, et dont la rigidité et la solidité sont augmentées, et qui peut être plus facilement relié au condenseur.

L'installation selon l'invention peut également être utilisée pour le refroidissement du local en été. Dans une forme de réalisation propre à cette double utilisation (figure 9) le compresseur 131 a sa tubulure d'aspiration 132 mise en communication à volonté, suivant la position d'une vanne d'inversion 133, avec un premier tuyau 134 relié à un premier échangeur de chaleur 135, ou bien avec un second tuyau 136 relié à un second échangeur de chaleur 137, la sortie 138 du compresseur 131 étant, simultanément, mise en communication soit avec le tuyau 136 soit avec le tuyau 134. L'échangeur de chaleur 135 est à l'extérieur de l'immeuble comportant le local, avantageusement le long du mur, et l'échangeur de chaleur 137 est à l'intérieur du local, avantageusement le long de la face intérieure du mur, sous la fenêtre. Le conduit de sortie 138 est relié à l'échangeur 135 par un raccord auto-obturable 141.

L'organe mobile 142 de la vanne d'inversion 133 a été représenté en trait plein pour une de ses conditions et en trait pointillé pour l'autre condition.

Sur une canalisation 143 reliant l'échangeur de chaleur 135 à l'échangeur de chaleur 137 sont prévus deux circuits 144 et 145 en dérivation par rapport à des organes de détente respectivement 146 et 147. Sur chacun des circuits 144 et 145 est placé un clapet de retenue, respectivement 148 et 149. La partie extérieure 151 de la canalisation 143 est reliée à la partie intérieure par un raccord auto-obturable 152. A proximité de l'organe de détente 146 est placé un déshydrateur 153.

Dans le cas d'une installation propre à assurer non seulement le chauffage l'hiver, mais la climatisation l'été, un bac de récupération des condensats est prévu sous l'échangeur de chaleur à l'intérieur du local, comme montré en 65 sur la figure 2, à l'aplomb de la paroi constitutive de la gaine ou hotte, en regard du bord inférieur 64.

Dans un autre mode de réalisation de l'installation (figure 10), l'air extérieur est remplacé par une source d'eau S, par exemple à 20°C, le courant d'eau étant amené par une canalisation 161 au circuit primaire 169 d'un échangeur de chaleur 162 et quitte celui-ci à une température de l'ordre de 15°C par exemple, la sortie 163 de la canalisation secondaire de l'échangeur étant reliée à un compresseur 164 qui alimente par une canalisation 165 un échangeur de chaleur 166, par exemple constitué par un faisceau de tubes parallèles sur lesquels sont fixées des ailettes. La sortie 167 de l'échangeur 166 est reliée à l'entrée du circuit secondaire de l'échangeur 162. Le compresseur 164 et l'échangeur 162 peuvent comme précédemment être placés dans une caisse isolante 168. L'ensemble est placé comme précédemment dans un carter 171 formant cheminée.

## Revendications

1. Installation de chauffage d'un local par de l'air chaud à l'aide d'une pompe à chaleur comprenant un condenseur (C) placé à l'intérieur du local et un évaporateur (E) placé à l'extérieur, caractérisée en ce que le condenseur (C) est disposé dans une enveloppe ouverte à ses extrémités inférieure et supérieure, dans laquelle l'air circule de bas en haut par tirage naturel provoqué par le chauffage de l'air lors de son passage le long du condenseur (C).

2. Installation de chauffage d'un local par de l'air chaud à l'aide d'une pompe à chaleur comprenant un condenseur (C) placé à l'intérieur du local et un évaporateur (E) placé à l'extérieur, caractérisée en ce que le condenseur (C) forme une enveloppe ouverte à ses extrémités supérieure et inférieure, dans laquelle l'air circule de bas en haut par tirage naturel provoqué par le chauffage de l'air lors de son passage le long du condenseur (C).

3. Installation selon la revendication 1 ou 2, comprenant un compresseur, caractérisée en ce que ledit compresseur (54, 94, 156, 164) est placé dans un caisson insonorisant (84, 114, 155, 168) logé à l'intérieur de ladite enveloppe.

4. Installation selon l'une des revendications précédentes, caractérisée en ce que l'évaporateur (E) placé à l'extérieur du local (P) forme, avec le mur (M) de ce local, des conduits ouverts à leurs parties supérieures et inférieures et dans lesquels l'air circule de haut en bas par tirage naturel.

5. Installation selon l'une des revendications précédentes, caractérisée en ce que le condenseur (C) et/ou l'évaporateur (E) sont des échangeurs de chaleur du type à tubes parallèles (96, 105) garnis d'ailettes (97, 106) respectivement.

6. Installation selon l'une des revendications 1 à 4, caractérisée en ce que le condenseur (C) et/ou l'évaporateur (E) sont formés par au moins une plaque (27, 71, 122, 123, 154) du type à tubulure intégrée de circulation de fluide frigorigène.

7. Installation selon la revendication 6, caractérisée en ce que ladite plaque (71, 122, 123, 154) est conformée de manière à présenter des ondulations verticales.

8. Installation selon l'une des revendications précédentes, caractérisée en ce qu'elle comprend une vanne de dégivrage (62) reliant la sortie (55) du compresseur (54) à l'entrée de l'évaporateur (E) et un dispositif de réchauffage (82) entourant la canalisation d'aspiration (83) du compresseur (54).

## Claims

1. An installation for heating a premises with hot air using a heat pump comprising a condenser situated inside the premises and an evaporator (E) situated outside, characterised in that the condenser (C) is disposed in a housing which is open at its lower and upper ends and through which air circulates upwardly by natural draught caused by the air being heated as it passes along the condenser (C).

2. An installation for heating a premises with hot air using a heat pump comprising a condenser situated inside the premises and an evaporator (E) situated outside, characterised in that the condenser (C) forms a housing which is open at its lower and upper ends and through which air circulates upwardly by natural draught caused by the air being heated as it passes along the condenser (C).

3. An installation according to claim 1 or 2, including a compressor, characterised in that said compressor (54, 94, 156, 164) is placed in a sound-proofing box (84, 114, 155, 168) located inside said housing.

4. An installation according to any preceding claim, characterised in that the evaporator (E) situated outside the premises (P) forms, together with the wall (M) of the premises, ducts that are open at their upper and lower ends and through which air circulates downwardly by natural draught.

5. An installation according to any preceding claim, characterised in that the condenser (C) and/or the evaporator (E) are parallel tube type heat exchangers (96, 105) provided with fins (97, 106) respectively.

6. An installation according to any one of claims 1 to 4, characterised in that the condenser (C) and/or the evaporator (E) are formed by at least one plate (27, 71, 122, 123, 154) of the type having integrated piping for refrigerating fluid flow.

7. An installation according to claim 6, characterised in that the said plate (71, 122, 123, 154) is shaped to have vertical corrugations.

8. An installation according to any preceding claim, characterised in that it includes a defrosting cock (62) connecting the output (55) of the compressor (54) to the input of the evaporator (E) and a reheater (82) surrounding the inlet pipe (83) to the compressor (54).

## Patentansprüche

1. Heizvorrichtung für einen Raum durch heisse Luft mit Hilfe einer Wärmepumpe, die einen Kondensator enthält, der im Innern des Raumes vorgesehen ist, und einen Verdampfer (E), der aussen angebracht ist, dadurch gekennzeichnet, dass der Kondensator (C) sich in einer Umkleidung befindet, die an ihrem unteren und oberen Ende offen ist, in der die Luft von unten nach oben durch natürlichen Zug durchströmt, der durch die Beheizung der Luft entsteht, wenn sie sich entlang dem Kondensator (C) bewegt.

2. Heizvorrichtung für einen Raum durch heisse Luft mit Hilfe einer Wärmepumpe, die einen Kondensator (C) enthält, der im Innern des Raumes vorgesehen ist, und einen Verdampfer (E), der aussen angebracht ist, dadurch gekennzeichnet, dass der Kondensator (C) eine Umkleidung bildet, die an ihrem oberen und unteren Ende offen ist, in der die Luft von unten nach oben durch natürlichen Zug durchströmt, der durch die Beheizung der Luft entsteht, wenn sie sich entlang dem Kondensator (C) bewegt.

3. Vorrichtung gemäss Anspruch 1 oder 2, die einen Kompressor einschliesst, dadurch gekennzeichnet, dass der genannte Kompressor (54, 94, 156, 164) in einem Schalldichten Gehäuse untergebracht ist, das sich im Innern der genannten Umkleidung befindet.

4. Vorrichtung gemäss der vorstehenden Ansprüche, dadurch gekennzeichnet, dass der Verdampfer (E), der ausserhalb des Raumes (P) vorgesehen ist, mit der Wand (M) dieses Raumes Leitungen bildet, die an ihren oberen und unteren Teilen offen sind und in denen Luft von oben nach unten durch natürlichen Zug strömt.

5. Vorrichtung gemäss einem der Vorstehenden Ansprüche, dadurch gekennzeichnet, dass der Kondensator (C) und/oder der Verdampfer (E) Wärmeaustauscher vom Typ paralleler Leitungen (96, 105) sind, die mit Rippen (97 bzw. 106) versehen sind.

6. Vorrichtung gemäss einem der Ansprüche 1 bis 4, dadurch gekennzeichnet, dass der Kondensator (C) und/oder der Verdampfer (E) aus mindestens einer Platte (27, 71, 122, 123, 154) des Röhrentyps besteht, die mit der Anlage des umlaufenden Kühlmittels integriert ist.

7. Vorrichtung gemäss Anspruch 6, dadurch gekennzeichnet, dass die genannte Platte (71, 122, 123, 154) so gestaltet ist, dass sie senkrechte Wellen hat.

8. Vorrichtung gemäss einem der vorstehenden Ansprüche, dadurch gekennzeichnet, dass sie ein Abtauventil (62) einschliesst, das den Ausgang (55) des Kompressors (54) mit dem Eingang des Verdampfers (E) und einer Vorrichtung zur Aufheizung (82) verbindet, welche die Ansaugleitung (83) des Kompressors (54) umgibt.

# Fig. 1

# Fig. 2

0 007 860

# Fig.3

Fig. 4

Fig. 5

Fig. 6

Fig. 7

3

Fig. 8

Fig. 9

Fig. 10